# EUROPEAN PATENT APPLICATION

(11) **EP 1 394 701 A2**
(43) Date of publication of application: **03.03.2004**
(21) Application number: 03254544.4
(22) Date of filing: 19.07.2003
(51) Int. Cl.: G06F 17/30

(54) **Establishment of network connections**

(30) Priority: 31.07.2002 GB 0217795; 01.10.2002 GB 0222696
(71) Applicant: Hewlett-Packard Development Company, L.P., Houston, Texas 77070 (US)
(72) Inventor: Christodoulou, Athena, Easton, Bristol BS5 6EQ (GB); Taylor, Richard, Olveston, Bristol BS35 4BZ (GB); Tofts, Christopher, Iron Acton, Bristol BS37 9XJ (GB)
(74) Representative: Jones, Bruce Graeme Roland

(57) **Abstract**

Upon downloading of a home page for example, which contains two or more links to other pages (either within the same site, or part of a different site), the links to those pages are pre-emptively actuated, i.e. before manual actuation by a user. Consequential download of these pages may be either performed simultaneously but at different speeds, thereby reflecting pre-determined weightings for each of the pages, or one after the other, with the order reflecting the weightings.

## Description

### BACKGROUND TO THE INVENTION

The present invention relates to the establishment of network connections, such as for example, the establishment of a connection from a client computing entity ("client") to a server computing entity ("server"), and thus, *inter alia,* to the establishment of such connections as may occur during browsing at the client of a website which is hosted on the server.

Typically when a client connects to a server on which a website is hosted, the client will initially download a copy of a page from the website, which has a number of links to other pages. These other pages may be part of the same site or a different site. These links are effectively pointers to the other pages which are actuable to cause connection to those pages; traditionally downloading of one of these other pages to the client is also instigated upon actuation of the relevant link. This can result in undesirable delay in obtaining these pages. One aspect of the present invention provides a method of establishing network connections which ameliorates this situation.

### SUMMARY OF THE INVENTION

According to a first aspect of the present invention there is provided a method of browsing a website which has a first web page with second and third links to second and third web pages respectively, the method including the steps of:
subsequent to downloading address information of the second and third links on the first web page, but prior to actuation of either the second or third links, commencing the process of downloading the second and third web pages; wherein
the process of downloading the second and third web pages is performed on the basis of a predetermined relative priority.

By commencing downloading of the second and third pages pre-emptively, i.e. prior to actuation of the links to those pages by a user, the pages will be available for browsing more quickly upon actuation of the links by a user, typically because they will be accessed from cache memory of the client - the location to which they are preferably downloaded. The relative priority of the download broadly speaking determines the relative time taken, as measured from acquisition of the second and third links by the client, for the corresponding pages to be downloaded. Accordingly, in one embodiment the second and third pages are downloaded simultaneously, and the relative priority determines the relative speeds at which they are downloaded. In a further embodiment the second and third pages are downloaded one after the other, i.e. only when the process of downloading one of the second and third pages is complete does the process of downloading the other start, with the relative priority simply determining the order of the download.

Relative priority may be determined for example in accordance with the relative probability of the respective links being actuated (this being established for example on the basis of the relative numbers of previous browser connections which have requested to each of these pages from the first web page), so that the likelihood is that pages used most often will be downloaded most rapidly. Alternatively the priorities may reflect economic concerns, so that more profitable pages are downloaded more quickly.

In one embodiment, the download speed of the pages is controlled by the client. Typically, the downloaded pages will be held within an ephemeral cache memory of the client, usually known as "session cache" because it may be persistent only for the duration of a browsing session.

### BRIEF DESCRIPTION OF DRAWINGS

Embodiments of the invention will now be described, by way of example, and with reference to the accompanying drawings, in which:
Figs. 1 to 3 are schematic illustrations of the process of connecting a client to a server and downloading plural web pages according to an embodiment of the present invention;
Fig. 4 is an example of html code for a page having links in accordance with an embodiment of the present invention;
Fig. 5 is a schematic illustration of one process of downloading a web page in which the speed of download is controlled primarily by the client; and
Fig. 6 is further schematic illustration of the process of Fig. 5.

### DESCRIPTION OF THE PREFERRED EMBODIMENTS

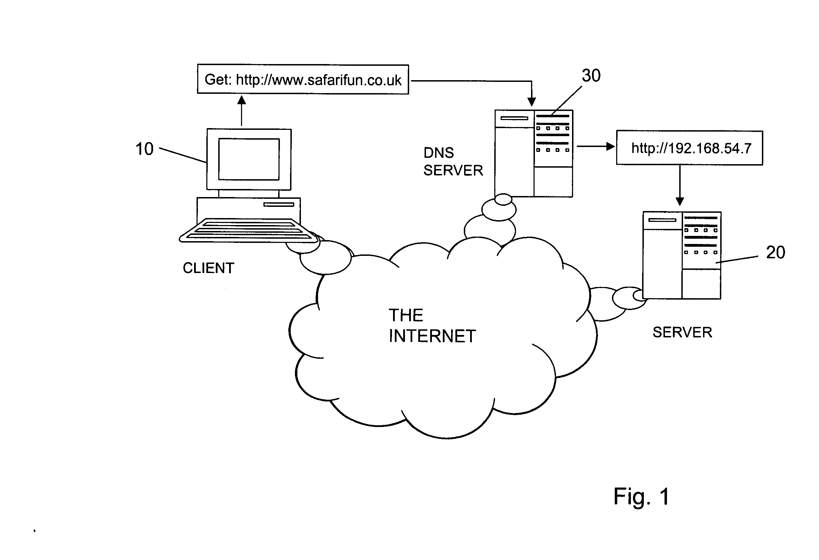

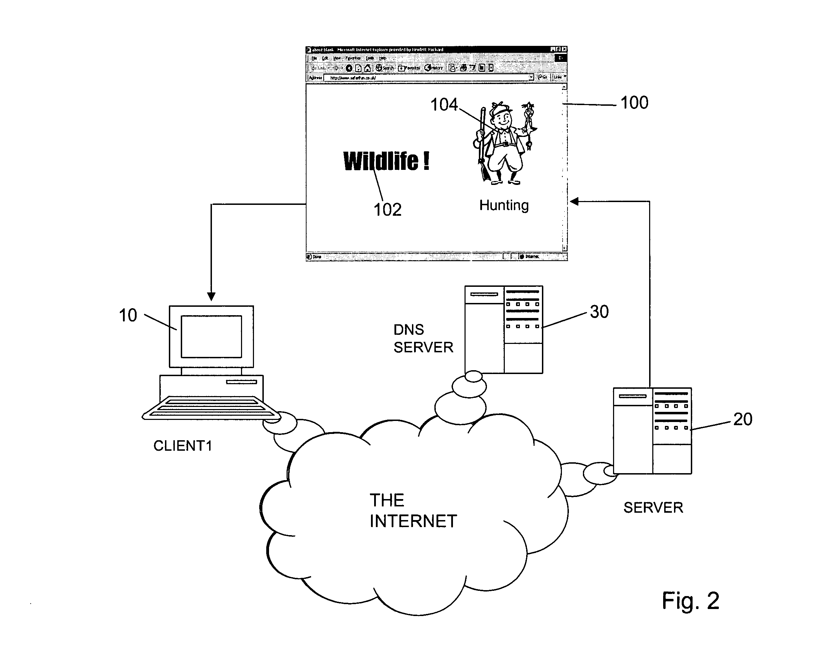

Referring now to Fig. 1, a network, in this example the Internet, is illustrated schematically, and includes a client computer 10, a server computer 20, and a Domain Name Service ("DNS") server 30, which converts or "resolves" URLs in alphanumeric characters (e.g. http://www.bbc.co.uk) into numeric Internet Protocol ("IP") addresses (e.g. 192.168.56.3 - this being an exemplary IP address and not the IP address associated with the aforementioned URL), which are then used to establish contact with the intended network destination. In the present example the browser programme within the client 10 is operating to request download of a web page with the fictitious (at the time of writing) URL http://www.safarifun.co.uk . This is resolved to an IP address at the DNS server 30 and passed on to the server 20 where the desired web page is hosted. Referring now to Fig. 2, upon receipt of the request for the web page 100, the server 20 returns a copy of the page to the client 10, which as can be seen from Fig. 2, includes two links to other pages: "wildlife" and "hunting", 102 and 104 respectively. Each of these links is actuable to connect to the location within the network to which they point (in this example a different page of the same website), thus they are known as "links" to those pages.

In the present application the term "link" is intended to include within its scope a pointer from one location to another, which is actuable to cause connection from the location of the link to the location to which the link points. In one embodiment a link is essentially a series of machine-executable instructions, usually in the form of a block of code, which is executed to connect to a predetermined address. Execution is usually initiated by some user action, for example clicking on an icon displayed by a graphical user interface, such as a window of a web browser. Usually, the icon provides some visual signification to the user of the subject matter located at the address to which the link points, in this instance the banner "wildlife" or the picture of the hunter, or sometimes simply text denoting the address to which the link points, e.g. http://www....... Such links are referred to as hyperlinks. Links represented by the icons 102, 104 are hyperlinks, that is to say either of these may be actuated by clicking upon the relevant icon to cause the browser programme to navigate to the page in question (by virtue of the operation of code which is executed when the icon is clicked).

In the vernacular of computer users the distinction between a link on the one hand, e.g. the code executable to establish a connection, and on the other hand the icon providing both the visual representation of that code and a means for its actuation is blurred, so that the term "link" is frequently used by those skilled in the art to refer to the icon and associated code in combination. This *de facto* convention will be adopted henceforth in this specification unless the context requires otherwise (e.g. where precision is required to distinguish between the code and an icon representing it, or in the claims where the term link is intended to be interpreted broadly to encompass both useages).

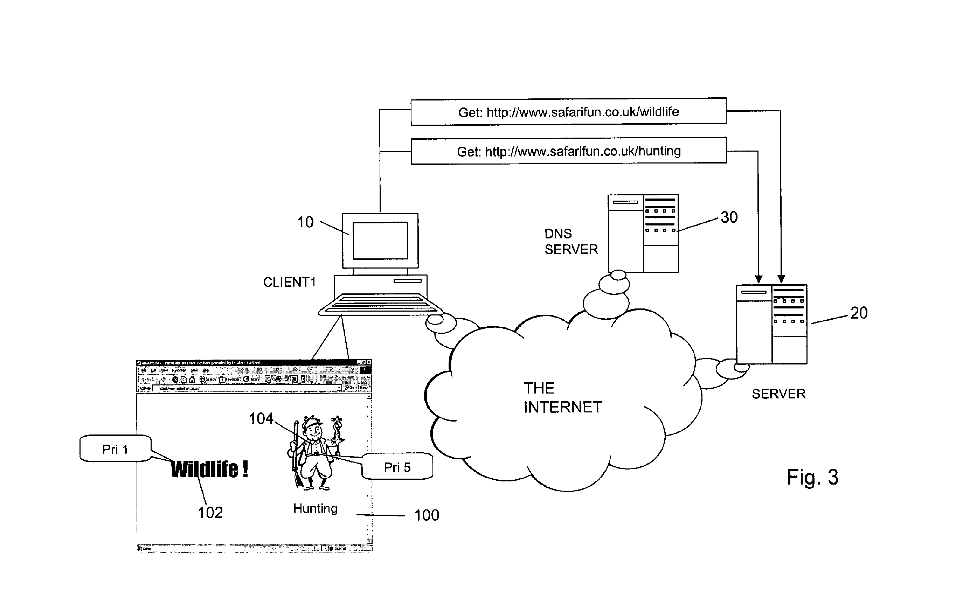

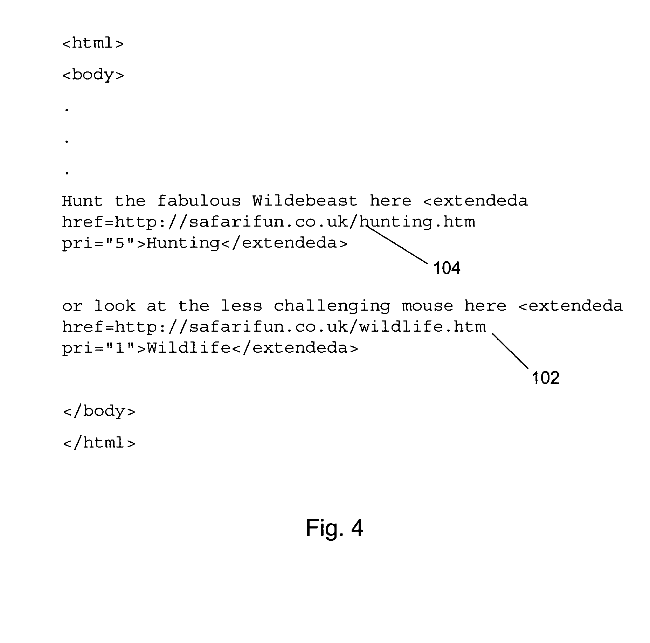

Referring now to Fig. 3, in accordance with the present invention, upon receiving the page 100, the browser programme of the client scans the html code for the page 100 for the purpose of detecting any links, and upon detection of such links, or more accurately, address information for another page which is part of a link, automatically (i.e. without the user of the client actuating the links) requests the pages to which the links point from the server 30, this action being illustrated schematically in Fig. 3. Referring additionally to Fig. 4, the code for the page includes the two links 102, 104 in text form, as part of what is known as the "markup" for the page as a whole (i.e. text and other material in conjunction with the labels in html which provide, *inter alia,* format instructions). In accordance with the present embodiment of the invention, each of the links has associated with it a priority which denotes the relative speed with which it is to be downloaded from the server. The priority for the links 102, 104 is "pri=1" for the wildlife link 102 and "pri=5" for the hunting link, and this is effectively an instruction to download the hunting lnk 104 five times more quickly than the Wildlife link 102. According to one embodiment the priority is based on the probability that it will be actuated by a user subsequent to downloading by a user of the page on which the links are located, so that the relative priorities of the two links reflect the fact that, for example, the wildlife page to which link 102 points is five times less likely to be the next destination than the hunting page to which link 104 points. Typically these probabilities are calculated using the relative numbers of previous occasions on which each of the two links 102 and 104 are actuated. It is equally possible however that the priority may be based on some other premise. For example, the priority for the relative speed for pre-emptive download of two or more pages may equally be based upon the revenue or margin generated from those pages, so that for example where there are two links, and one is twice as profitable as another, the most profitable link may be given a priority rating twice (for example) the size of the less profitable link to reflect this, so that it is pre-emptively downloaded twice as fast. The downloaded pages are stored in the cache memory within the client and if corresponding links are actuated, are retrieved from the cache memory (a process significantly faster than downloading a page).

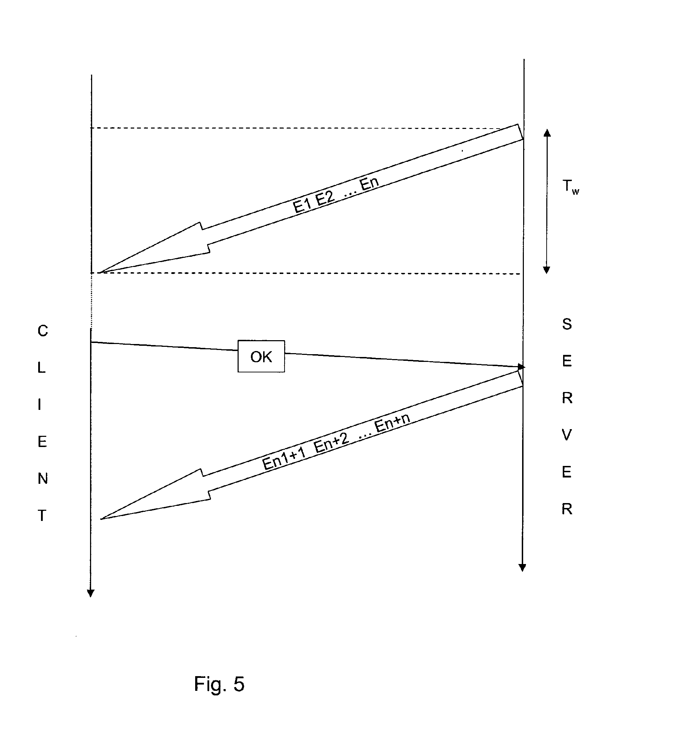

One way in which the download speed of a page from a server to a client may be controlled from the client side will now be illustrated in highly schematic form, using for the purposes of exemplification Transmission Control Protocol over Internet Protocol ("TCP/IP"), of which hypertext transfer protocol ("http") is a client-server specific form. Referring now to Fig. 5, when a server receives a request for a web page, for example, components of the page, such as text with hyper text markup language ("html") labels, or pictures pass down through the hierarchy of systems programmes (sometimes known as the "stack") within the server, to the TCP/IP programme (or "layer"). The TCP/IP layer operates to divide the component in question into packets E which are then transmitted to the client. The TCP/IP layer operates on the basis of time windows, and dispatches as many packets E1, E2..... En to the client as possible over the course of a time window T_{w}, the number of packets which may be dispatched in a given time window being neither determinate in advance, nor necessarily consistent from one time window to the next (since it may be influenced by such things as the load on the server, for example). Having dispatched the packets, the TCP/IP layer then awaits acknowledgement from the client before dispatching any further packets in a subsequent time window, and it is by controlling the speed of acknowledgement from the client that the download speed may be controlled from the client side (the relatively indeterminate nature of the time elapsed between receipt by the client of a bundle of packets from the server, and the dispatch of an acknowledgement by the client being illustrated schematically by the dotted timeline on the client side). Specifically the client allocates a proportion of its processor time to the processing of a given http request on the basis of the priority marked in the link, which as can be seen from Fig. 3 is specified by the parameter "P" (in the illustrated example Pri 1 and Pri 5 for the wildlife and hunting pages respectively), and is therefore only able to issue acknowledgements to packets dispatched from the server 20 within this allocated proportion of its processing time. The relative speed with which the wildlife and hunting pages are downloaded is therefore, in the present example, controlled by the differing response times in issuing acknowledgements in respect of the requests for the wildlife and hunting pages.

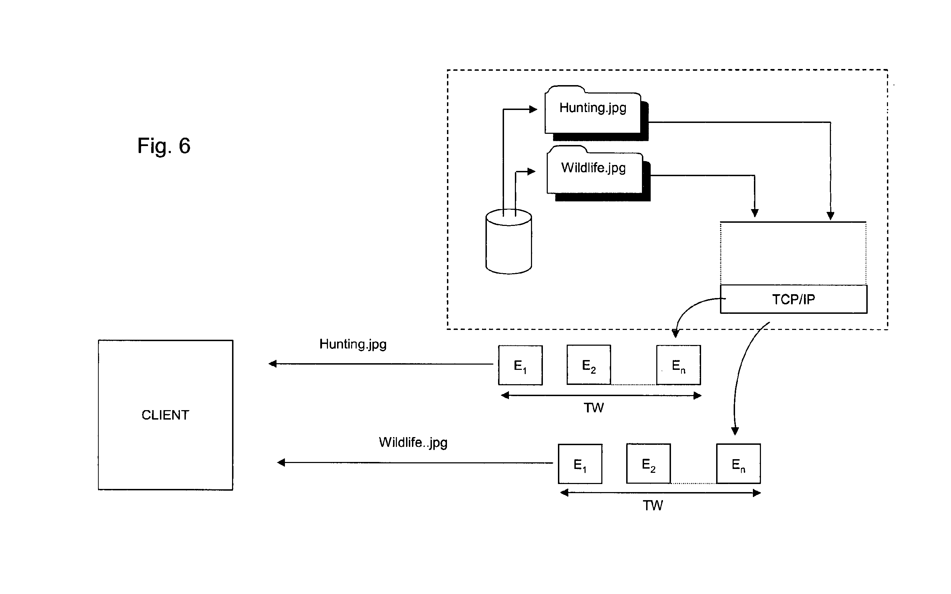

Referring now to Fig. 6, each http request involves the launching of one, and usually more small programmes within the browser of the client, known as a "thread", which sets up a connection to the server for the retrieval of a particular component of the requested web page, and performs functions such as the acknowledgement of receipt of packets from the server described above. For example, upon requesting downloading of a web page an initial thread is launched to retrieve the most rapid component of the page to be downloaded, i.e. any text and embedded html labels within the text. This html "document" will also contain an indication of other elements within the page, such as, for example pictures stored as .jpg (an abbreviation for "joint photographic experts group") files. Once the browser detects that the requested page also contains a .jpg file it will launch a further thread to retrieve the .jpg file. Fig. 6 shows schematically the retrieval from storage of each of these .jpg files, their passage through the hierarchy of systems programmes until they reach the TCP/IP layer, and their dispatch as packets E to the client.

In a further modification, the use of relative priority ratings for the downloading of pages pointed to from links can be applied to the acquisition of elements of the content from those pages, such as images for example. Thus it may be desirable that some elements of content, such as one or more particular images for example, are more rapidly acquired by the client than others, for example because their acquisition is deemed to be financially more advantageous, or because it has been determined that the particular image is the one that is most sought after of all those on the page in question. These elements of content may therefore have priorities associated with them which, for example instruct the client as to the relative speed with which the thread retrieving the content element is processed by the client. The use of relative priorities to process download of content elements may be employed either when nested within priorities for the download of the page on which the content element is situated, or independently.

An alternative manner of providing a priority based pre-emptive download of pages from links on a source page involves simply the serial downloading of pages, on the basis of relative priority. Thus for example the wildlife page may in the link be denoted as having "order=1", and the hunting page "order=2". Links including such instructions will then be processed to download the wildlife page first in its entirety, and then the hunting page. This technique may equally be applied to the downloading of content elements.

In all the above-described examples, pre-emptive downloading of pages may be superseded by the manual intervention of a user, for example by actuating a link, or otherwise requesting a page (whether a page which is in the process of being pre-emptively downloaded or not). In one example any manual intervention causes the processing of http requests for all pages which are not requested by the manual intervention to stop. The content downloaded up to that point may then, if desired, be retrieved from cache memory and augmented with the remaining content on the server. It is to be understood that in the embodiment in which pages are downloaded pre-emptively one after the other (as opposed to simultaneously at different speeds), pre-emptive downloading of both pages is considered to have started with the commencement of the http request for the first of these pages to be pre-emptively downloaded, since the process requires that first page to be downloaded completely prior to commencing an http request for the second of these two pages; thus it is to be regarded as a single pre-emptive downloading process involving two (or more as the case may be) separate pages.

Preferably, each of the links on the homepage is actually an alias for one or more URLs which identify specific secondary servers on which the pages accessible via the links on the home page are hosted. In this way a connection may be made more rapidly to the secondary server, rather than requests being re-routed from the server hosting the home page. This is described more fully in our co-pending UK patent application GB 0217795.4.

For ease of understanding and clarity of explanation the above examples infer a complete download of a web page on which links are located prior to commencement of the pre-emptive downloading of pages to which they point. This is not essential however, and it is equally possible to commence pre-emptive downloading as soon as an address to which a link points has been received.

## Claims

1. A method of browsing a website which has a first web page with second and third links to second and third web pages respectively, the method including the steps of:
subsequent to downloading address information of the second and third links on the first web page, but prior to actuation of either the second or third links, commencing the process of downloading the second and third web pages; wherein
the process of downloading the second and third web pages is performed on the basis of a predetermined relative priority.

2. A method according to claim 1 wherein the predetermined relative priority provides predetermined relative download speeds for the second and third pages.

3. A method according to claim 2 wherein the download of the second and third pages takes place simultaneously, the relative speeds corresponding to their relative priority.

4. A method according to claim 1 wherein the predetermined relative priority provides a predetermined order for downloading the second and third pages.

5. A method according to claim 4 wherein the download of one of the second and third pages only commences when download of the other of the second and third pages is complete.

6. A method according to claim 1 further comprising the step of downloading elements of content of the second and third pages on the basis of a predetermined priority.

7. A method according to claim 1 further comprising the step of storing the second and third web pages in cache memory within the client.

8. A method according to claim 1 wherein the speed of downloading is controlled by at least the client.

9. A method according to claim 8 wherein the relative speed of downloading of the second and third pages is controlled on the basis of instructions within the second and third links.

10. A method according to claim 1 wherein the first, second and third pages are all on the same website.

11. A method according to claim 1 wherein each of the links has a specific URL which identifies uniquely the address within the network of a server on which the second and/or third pages are hosted.

12. A method of operating a web server comprising the steps of sending to a client a web page containing two links to further pages, and including with the web page for each of the two links an associated relative priority with which the further pages are to be pre-emptively downloaded by the client.

13. A method according to claim 12 wherein the relative priority provides predetermined relative download speeds for the further pages.

14. A method according to claim 13 wherein the further pages are downloaded simultaneously.

15. A method according to claim 12 wherein the relative priority provides a predetermined relative order in which the further pages are to be downloaded.

16. A web page including first and second links to first and second further pages, each link having associated therewith a relative priority with which the first and second further pages are to be pre-emptively downloaded by a client displaying the web page.

17. A web page according to claim 16 wherein the relative priority provides predetermined relative download speeds for the further pages.

18. A web page according to claim 16 wherein the relative priority provides a predetermined relative order in which the further pages are to be downloaded.
